# EUROPEAN PATENT APPLICATION

(11) **EP 1 666 781 A1**
(43) Date of publication of application: **07.06.2006**
(21) Application number: 04773528.7
(22) Date of filing: 24.09.2004
(51) Int. Cl.: F16K 49/00

(54) **METHOD OF HEATING FLUID CONTROLLER**

(30) Priority: 24.09.2003 JP 2003331277
(71) Applicant: FUJIKIN INCORPORATED, Osaka-shi, Osaka 550-0012 (JP)
(72) Inventor: TANIKAWA, Tsuyoshi c/o FUJIKIN INCORPORATED, Osaka-shi, Osaka 5500012 (JP); YAKUSHIJIN, Tadayuki c/o FUJIKIN INCORPORATED, Osaka-shi, Osaka 5500012 (JP); MOCHIZUKI, Yasunori c/o FUJIKIN INCORPORATED, Osaka-shi, Osaka 5500012 (JP)
(74) Representative: Paul, Dieter-Alfred
(86) International application number: PCT/JP2004/014440
(87) International publication number: WO 2005/028937

(57) **Abstract**

The fluid controller (1) having a projecting joint (4) at the side surfaces and an operation driving part arranged at the top surface of the block shaped body (2) is heated using a heating device (11) incorporating the heaters (14) (15) and including a pair of holding members (12) (13) for sandwiching the fluid controller (1) to be heated from both sides. The body (2) is heated from both side surfaces while controlling the temperature of a bottom surface of the body (2) of the fluid controller (1).

## Description

### TECHNICAL FIELD

The present invention relates to a method of heating a fluid controller suitable in heating a valve and the like.

### BACKGROUND ART

In the fluid controller of a valve and the like used in a semiconductor manufacturing device, sometimes heating must be performed to prevent re-liquefaction when gasificating and flowing the fluid, which is a liquid at normal temperature. A heating device may be that using a tape heater and the like, but a dedicated heating device integrally assembled with the fluid controller is sometimes desired to enhance efficiency and workability during installation.

Conventionally, that incorporating the heater and including a pair of holding members for sandwiching the body of the fluid controller that is to be heated from both sides with the joint in the exposed state is known as an example of such dedicated fluid controller heating device (Patent article 1 = Japanese Laid-Open Patent Publication No. H10-299943). In patent article 1, a pair of side heaters and one bottom heater are used, and each heater is temperature controlled through the voltage ON-OFF control by the temperature controller when heating the fluid controller.

When heating the fluid controller, the temperature of a passage portion controlled (e.g., open and close of fluid passage) by an operation driving part is preferably made to a desired temperature. However, according to the conventional method of heating the fluid controller, even if the temperature of the heater or the temperature in the vicinity of the heater are controlled to a desired temperature, the temperature of the passage portion controlled by the operation driving part does not necessarily correspond thereto, and as a result, the passage portion controlled by the operation driving part becomes difficult to be made to a desired temperature. Further, when using a pair of side heaters and one bottom heater, and performing the temperature control with one temperature controller, the temperature of the bottom surface of the body especially becomes high, and uniform heating becomes difficult.

### DISCLOSURE OF THE INVENTION

The present invention aims to provide a method of heating a fluid controller capable of having the passage portion controlled by the operation driving part made to a desired temperature when heating the fluid controller.

A method of heating a fluid controller according to the present invention uses a heating device incorporating heaters and including a pair of holding members for sandwiching the fluid controller to be heated from both sides, wherein when heating the fluid controller having a projecting joint at side surfaces and an operation driving part arranged at a top surface of a block shaped body, the body is heated from both side surfaces while controlling the temperature of a bottom surface of the body of the fluid controller.

The fluid controller is configured by a block shaped body having a fluid flow-in passage, a fluid flow-out passage and a recess opened upward; an operation driving part, attached to the recess of the body, for opening and closing the fluid passage; and a joint arranged at the side surfaces of the body in a projecting manner and communicating to the fluid flow-in passage and the fluid flow-out passage. The operation driving part is configured by a diaphragm for opening and closing the fluid passage by being pressed against to or spaced apart from an annular valve seat, a valve rod with a diaphragm pusher at the lower end part, a piston for moving the valve rod up and down and the like. The operation driving part may have the valve rod moved up and down using other driving source such as compressed air, or may have the valve rod moved up and down by hand.

Since the temperature of the passage portion controlled by the operation driving part arranged at the top surface and the temperature of the bottom surface of the fluid controller have high correlation when the block shaped body of the fluid controller is heated from both side surfaces, by having the temperature of the bottom surface of the fluid controller made to a desired temperature, the temperature of the passage portion controlled by the operation driving part can be controlled at a considerably satisfactory precision.

The heater is temperature controlled by the voltage ON-OFF control by the temperature controller and the like. A platinum thin film temperature sensor, a sheath K type thermocouple and the like are used as the sensor for temperature control. The ceramic heater and the like is used as the heater but is not limited thereto.

The method of heating the fluid controller of the present invention is suitable when heating the body portion of the fluid controller to a high temperature.

In the above heating method, a joint accommodating recess for accommodating the joint is preferably formed in the holding member, so that the joint is heated with the body of the fluid controller. Thus, the correlation between the temperature of the passage portion controlled by the operation driving part and the temperature of the bottom surface of the fluid controller becomes higher, and the temperature of the passage portion controlled by the operation driving part is controlled at a more satisfactory precision.

Further, heating is preferably performed so that the central portion of each side surface of the body becomes a relatively high temperature compared with the bottom portion and the top portion thereof. To this end, a direct heating part contacting the central part of both side surfaces of the body is arranged in the heater, and the portion of the heater not arranged with the direct heating part performs indirect heating by way of the air layer.

According to the method of heating the fluid controller of the present invention, the temperature of the passage portion controlled by the operation driving part is controlled at a considerably satisfactory precision.

### BRIEF DESCRIPTION OF THE DRAWINGS

Fig. 1 is an exploded perspective view showing one embodiment of a heating device used to perform a method of heating a fluid controller according to the present invention.
Fig. 2 is an exploded perspective view of the device.
Fig. 3 is a perspective view showing an assembled state of the device.
Fig. 4 is a vertical cross sectional view of the device.
Fig. 5 is an exploded perspective view of a temperature sensor portion.
Fig. 6 is a graph showing the effect of the method of heating the fluid controller according to the present invention.
Fig. 7 is another graph showing the effect of the method of heating the fluid controller according to the present invention.
Fig. 8 is yet another graph showing the effect of the method of heating the fluid controller according to the present invention.

### BEST MODE FOR CARRYING OUT THE INVENTION

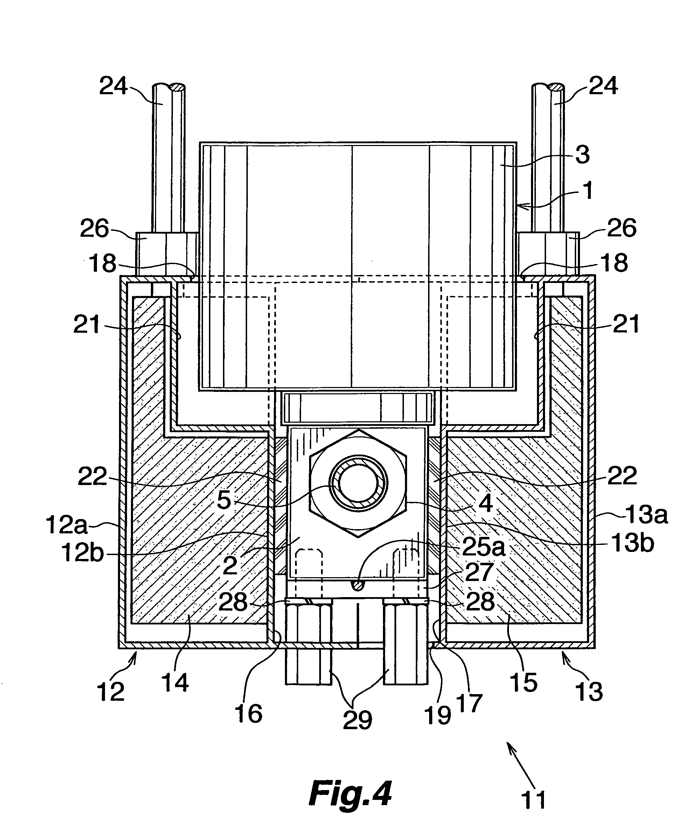

The embodiment of the present invention will now be described with reference to the accompanying drawings. In the following description, left and right refers to left and right of Fig. 4, front refers to the front side in Fig. 4and back refers to the back side.

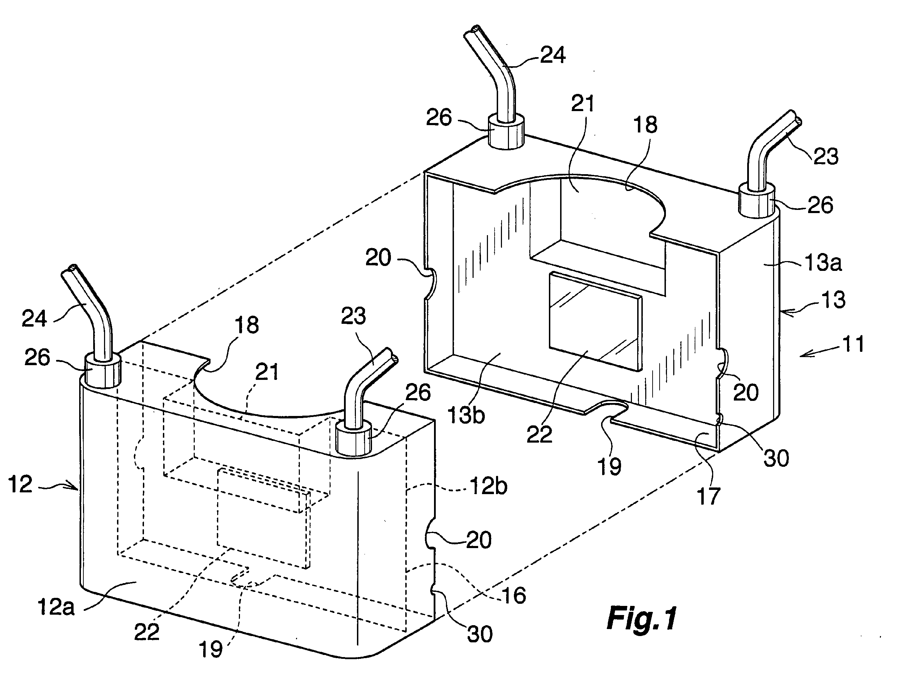

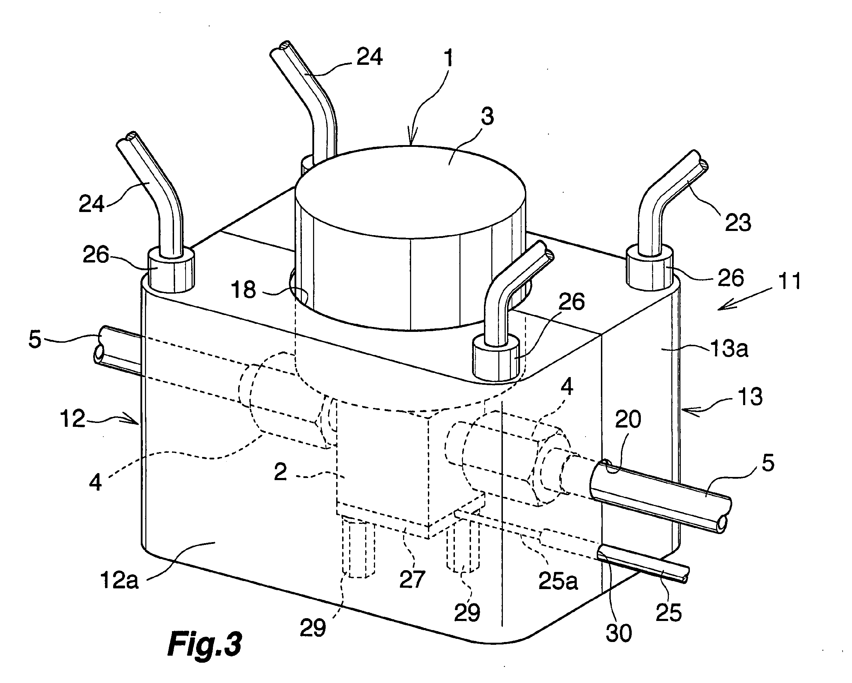

Fig. 1 to Fig. 5 show a first embodiment of a heating device that allows the method of heating the fluid controller of the present invention.

The heating device (11) incorporates left and right plate side heaters (14) (15), and includes a pair of left and right holding members (12) (13) for sandwiching the fluid controller (1) to be heated from both left and right sides.

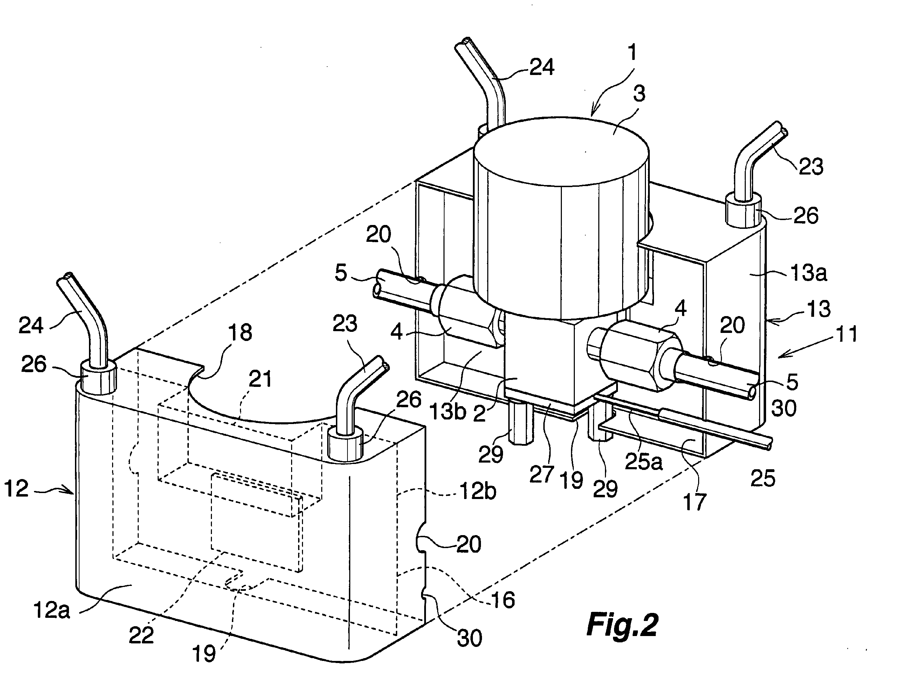

The fluid controller (1) to be heated is a diaphragm valve and includes a cuboid block shaped body (2); an operation driving part case (3) of a cylindrical shape, arranged at the top surface of the body (2) and accommodating the operation driving part; and an entrance/exit joint (4) arranged on the front and the back surfaces of the body (2) and communicating to the fluid path inside the body (2), wherein a pipe (5) is connected to each entrance/exit joint (4) as shown in Fig. 2 to Fig. 5.

Each holding member (12) (13) is configured by outer cases (12a) (13a) of a cuboid shape that opens inward in the left and right direction, and inner cases (12b) (13b) for accommodating the side heaters (14) (15) between the outer cases (12a) (13a), wherein fluid controller housing recesses (16) (17) are formed in the holding members (12) (13) to accommodate both the body (2) of the fluid controller (1) and the joint (4) arranged on the body (2) in a projecting manner by depressing the inner cases (12b) (13b) more than the outer cases (12a) (13a). The outer cases (12a) (13a) are made of SUS 304, and the inner cases (12b) (13b) are made of SUS 304. A cut out (18) of a semicircle in a horizontal cross section for accommodating substantially the middle part in the vertical direction of the operation driving part case (3) of the fluid controller (1) is arranged at the upper wall of the outer cases (12a) (13a) of each holding member (12) (13), a shaft member inserting hole (19) is arranged at the lower wall, and a pipe inserting hole (20) of a semicircle in a vertical cross section is arranged on each of the front and the back walls. A square shaped recess (21) for accommodating the lower part of the operation driving part case (3) is arranged at the middle portion in the front and back direction at the upper end part of the inner cases (12b) (13b).

The side heaters (14) (15) are U-shaped ceramic heaters with a central portion in the front and back direction of the upper end part cut out, and a direct heating part (22) contacting the central part on the left and right surfaces of the body (2) is arranged on the inner cases (12b) (13b). The portion of the side heaters (14) (15) not arranged with the direct heating part (22) performs indirect heating by way of an air layer.

The left and right holding member (12) (13) are coupled to each other so as to sandwich the fluid controller (1) from the left and right sides, whereby the remaining portion of the fluid controller (1) excluding the upper part of the operation driving part case (3) is covered by the left and right holding members (12) (13).

The power supply lead wires (23) (24) are connected to each terminal of the left and right side heaters (12) (13). Each lead wire (23) (24) is pulled out from the upper wall of the outer cases (12a) (13a) of the left and right holding members (12) (13) and supported at the upper wall by a cable clamp (26), and connected to a connector (not shown) at the upper part.

A temperature sensor (25) for performing temperature control of the left and right side heaters (12) (13) is attached to the bottom surface of the body (2) of the fluid controller (1) by way of a thin plate sensor fixture (27), and each heater (12) (13) is controlled so that the temperature of the temperature sensor (25) becomes a predetermined temperature.

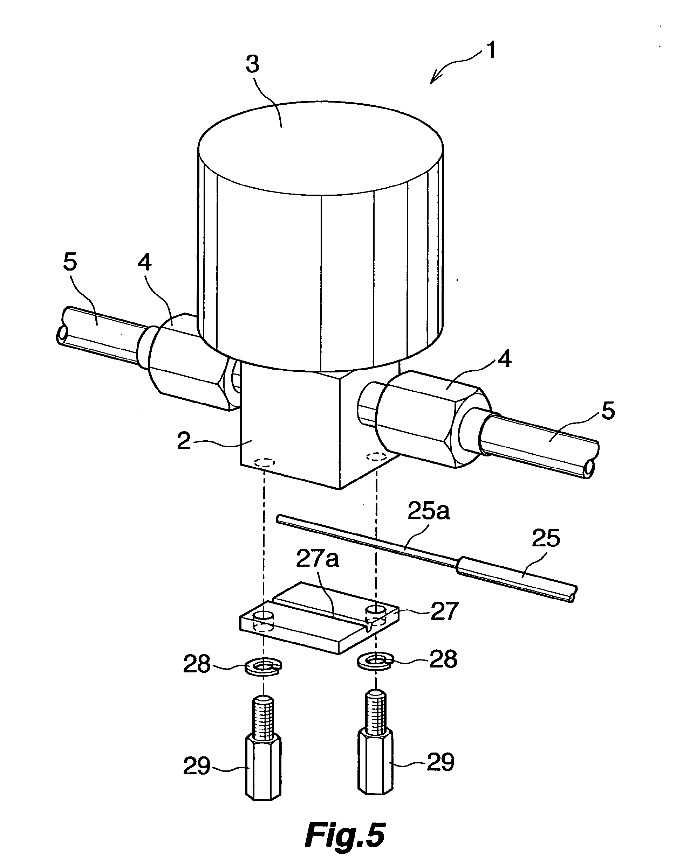

As shown in detail in FIG. 4 and FIG. 5, the temperature sensor (25) is a sheath type sensor having the distal end part (detecting part) (25a) fitted to a groove (27a) formed at the upper surface of the sensor fixture (27). The sensor fixture with sensor (27) is fixed to the bottom surface of the body (2) of the fluid controller (1) by means of a spring washer (28) and a spacer (29) with screw, whereby the temperature of the bottom surface of the body (2) of the fluid controller (1) is measured at satisfactory precision. The temperature sensor (25) is pulled outward from a sensor inserting hole (30) formed below the pipe inserting hole (20) at the front and back walls of the outer cases (12a) (13a) of each holding member (12) (13). The spacer with screw (29) is projected downward from the shaft member inserting hole (19) formed at the lower wall of the outer cases (12a) (13a) of each holding member (12) (13). Thus, the holding members (12) (13) holding the heater (14) (15) may be attached, with the temperature sensor (25) attached to the body (2) of the fluid controller (1).

According to such heating device (11) of the fluid controller, since the left and right holding members (12) (13) are attached from both left and right sides of the fluid controller (1) without interfering with the fluid controller (1), the heating device (11) can be installed without removing the pipe even if the pipe is connected to the entrance/exit pipe joint (6) of the fluid controller (1). Further, the joint (4) is heated with the body (2) since the both the body (2) and the joint (4) of the fluid controller (1) are accommodated in the holding members (12) (13) incorporating the heaters (14) (15), and thus the joint (4) does not need to be heated with a different means, and heating application is facilitated.

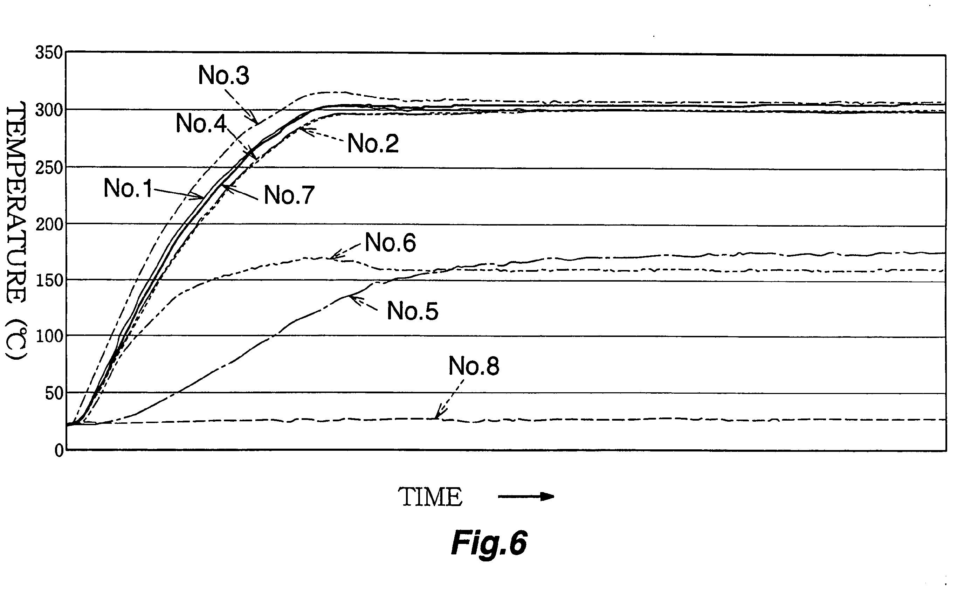

Fig. 6 shows the result of when the fluid controller (1) is heated using the heating device (11) and the temperature change at each location of the fluid controller (1) is measured. In the figure, No. 1 shows the temperature of the bottom surface of the body (i.e., portion controlled with a heating method of the present invention), No. 2 is the temperature on the IN side of the diaphragm, No. 3 is the temperature of the joint (4), No. 4 is the temperature of the OUT side of the diaphragm, No. 5 is the temperature at the front and back walls of the outer case (12a) of the holding member (12), No. 6 is the temperature of the top surface of the operation driving part case (3), No. 7 is the temperature of the passage portion in the body (2) (i.e., temperature of portion desired to be controlled), and No. 8 is the outside air temperature. As apparent from the graph, No. 1 (temperature change at the bottom surface) and No. 7 (temperature change in the passage portion in the body) are substantially the same, whereas the temperature of No.3 (temperature of joint) is considerably high and the temperatures of No. 5 (temperature of the outer case of the holding member) and No. 6 (temperature of the top surface of the operation driving part case) are significantly low with No. 7 (temperature of the passage portion in the body) as reference. Therefore, the temperature change of the passage portion in the body (2) controlled at the operation driving part can be accurately controlled by detecting and controlling the temperature change at the bottom surface of the body (2), and the temperature control of high precision is difficult when the temperature of the joint (4) or the temperature of the outer cases (12a) (13a) of the holding members (12) (13) are detected and controlled.

In Fig. 6, the heating temperature is assumed to be a relatively high temperature or about 300°C, but the heating method may be used at other temperatures, as described below.

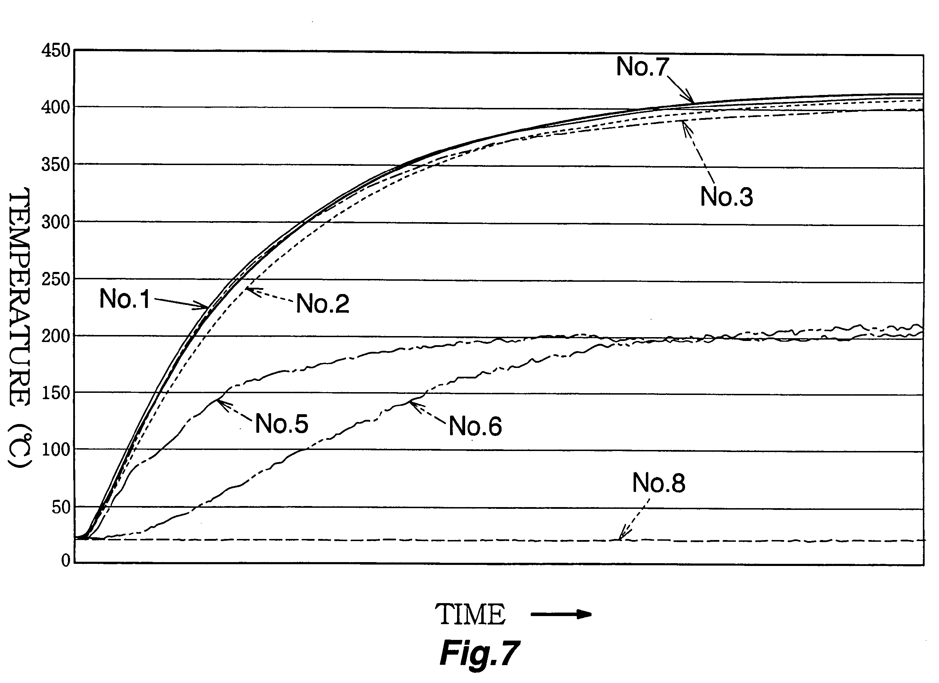

Fig. 7 shows the result of when the temperature change at each location of the fluid controller (1) is measured when the heating temperature is about 400°C. In Fig. 7, each No. is the same as that in Fig. 6. Since the difference between No. 2 (temperature on the IN side of the diaphragm) and No. 4 (temperature on the OUT side of the diaphragm) in the graph of Fig. 6 is small, the temperature at the diaphragm part is measured only at No. 2. As apparent from the graph of Fig. 7, No. 1 (temperature change at bottom surface) and No. 7 (temperature change in the passage portion of the body) are substantially the same, whereas the temperature of No.3 (temperature of the joint) is relatively low and the temperatures of No. 5 (temperature of the outer case of the holding member) and No. 6 (temperature of the top surface of the operation driving part case) are significantly low with No. 7 (temperature of the passage portion in the body) as reference. Therefore, the temperature change in the passage portion of the body (2) controlled by the operation driving part can be accurately controlled by detecting and controlling the temperature change at the bottom surface of the body (2) even at a higher temperature, and the temperature control of high precision is difficult when the temperature of the joint (4) or the temperature of the outer cases (12a) (13a) of the holding members (12) (13) are detected and controlled.

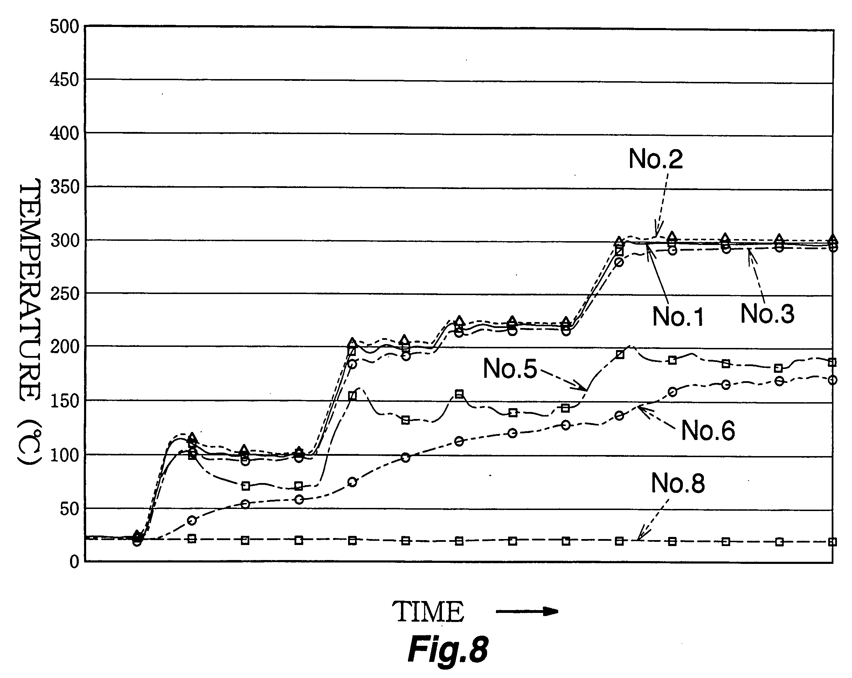

Fig. 8 shows the result of measurement of the temperature change at each location of the fluid controller (1) of when the set temperature is raised in the order of 100°C, 200°C, 220°C, 300°C. As apparent from the graph of Fig. 8, each temperature of No. 1 (body), No. 2 (diaphragm), and No. 3 (joint) reaches the set temperature in a few minutes and stabilizes thereafter, and thus the temperature control of high precision becomes possible. On the other hand, No. 5 (side surface of heater case) is unstable after reaching the set temperature, and the upper surface in No. 6 (valve actuator = operation driving part case) does not reach the set temperature, and thus a stable control becomes difficult in either case. Therefore, the accurate control of the temperature change of the passage portion in the body (2) controlled by the operation driving part becomes possible by detecting and controlling the temperature change at the bottom surface of the body (2) even at a lower temperature.

According to the heating method of the fluid controller, the body (2) and the joint (4) of the fluid controller (1) are heated to substantially the same temperature in a short period of time, which is effective in terms of rapid temperature rise and uniform heating since the body (2) and the joint (4) are heated by the heating device (11) and the heating method.

The shape of the fluid controller (1) is not limited to the above embodiment, and may take various shapes. If the fluid controller is changed, the shape of the recess for accommodating the fluid controller of the holding member is obviously appropriately changed. A heat insulting material may be attached to the outer surface of the left and right holding members (12) (13) to further enhance heat insulation and increase the heating temperature of the fluid controller (1).

### INDUSTRIAL APPLICABILITY

The method of heating the fluid controller according to the present invention heats the fluid controller such as a valve, which is used in the semiconductor manufacturing device and which must be heated while controlling the temperature, to a desired temperature, and contributes to enhancing the quality of the semiconductor and the like.

## Claims

1. A method of heating a fluid controller using a heating device incorporating heaters and including a pair of holding members for sandwiching the fluid controller to be heated from both sides, wherein
when heating the fluid controller having a projecting joint at side surfaces and an operation driving part arranged at a top surface of a block shaped body, the body is heated from both side surfaces while controlling the temperature of a bottom surface of the body of the fluid controller.

2. The method of heating the fluid controller as claimed in claim 1, wherein
a joint accommodating recess for accommodating the joint is formed in the holding member, and the joint is heated with the body of the fluid controller.

3. The method of heating the fluid controller as claimed in claim 1 or 2, wherein
heating is performed so that the central portion of each side surface of the body becomes a relatively high temperature compared with the bottom portion and the top portion thereof.
